# EUROPEAN PATENT SPECIFICATION

(11) **EP 4 203 542 B1**
(45) Date of publication and mention of the grant of the patent: **27.11.2024**
(21) Application number: 21863610.8
(22) Date of filing: 31.08.2021
(51) Int. Cl.: H04W 24/02, G06N 20/00, G06N 3/098

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(30) Priority: 04.09.2020 CN 202010923904
(43) Date of publication of application: 28.06.2023
(73) Proprietor: Huawei Technologies Co., Ltd., Shenzhen, Guangdong 518129 (CN)
(72) Inventor: GENG, Tingting, Shenzhen, Guangdong 518129 (CN); HU, Xingxing, Shenzhen, Guangdong 518129 (CN); ZENG, Qinghai, Shenzhen, Guangdong 518129 (CN)
(74) Representative: Gill Jennings & Every LLP
(86) International application number: PCT/CN2021/115798
(87) International publication number: WO 2022/048546

(56) References cited:
- WO-A1-2020/139179
- WO-A1-2020/146036
- CN-A- 110 119 808
- CN-A- 110 121 180
- CN-A- 111 444 848
- US-A1- 2016 323 768
- US-A1- 2016 323 768

## Description

### TECHNICAL FIELD

Embodiments of this application relate to the communications field, and more specifically, to a data transmission method and apparatus.

### BACKGROUND

A current mobile network supports more diversified services, so that the network needs to support different requirements such as an ultra-high rate, an ultra-low latency, ultra-high reliability, and/or massive connections. This makes network planning, network configuration, and resource scheduling increasingly complex. These new requirements, scenarios, and features bring unprecedented challenges to mobile network planning, operation and maintenance, and efficient operation. Network planning, self-optimization of network configuration, and resource scheduling based on manual experience or simple algorithms have disadvantages such as high time consumption, high costs, and poor adaptability of self-optimization and scheduling algorithms, and therefore cannot address these new challenges. For example, in a currently commonly used multiple-input multiple-output (multiple-input multiple-output, MIMO) scenario, a large amount of data is usually processed by a linear operation of algebra or a matrix, or data is processed based on an assumption such as Gaussian distribution, but an actual environment is complex and changeable. These algorithms are difficult to reach a theoretical upper limit of performance, and are applicable to limited environments. Other previously proposed arrangements are disclosed in WO 2020/146036 A1, WO 2020/139179 A1 and US 2016/323768 A1. WO2020146036 discloses a communication device with sensing component, which is configured to capture sensor measurements and output instances of sensor data, to an edge device. The edge device is configured to receive reporting packets from multiple sensors and to transmit sensor kit packets to a back-end system, which performs machine learning process on the received packets (training data).

WO2020139179 discloses a wireless device collecting a number of successive data samples for training of a machine learning model comprised in a network node. In particular the wireless device transmits to the network node, compressed data samples to be used in the training of the machine learning model. Thereby, the compressed data is available for the network node as training data for training of the machine learning model.

US2016323768 discloses a UE receiving an indication, from a mobility management entity (MME) of a second operator, said indication allowing collecting minimization of drive tests (MDT) logs of a UE of the second operator. Upon collecting the MDT logs, the UE transmits a trace record based on the collected MDT logs to a trace collection entity (TCE) of a first operator.

### SUMMARY

Embodiments of this application provide data transmission methods and apparatuses, to implement application of machine learning in a mobile network, and improve network work efficiency, as defined in the appended set of claims.

### BRIEF DESCRIPTION OF DRAWINGS

FIG. 1 is a schematic diagram of a wireless communication system 100 to which an embodiment of this application is applicable;
FIG. 2 is a schematic architectural diagram of a network device to which an embodiment of this application is applicable;
FIG. 3 is another schematic architectural diagram of a network device to which an embodiment of this application is applicable;
FIG. 4 is a schematic flowchart of a data transmission method according to an embodiment of this application;
FIG. 5 is another schematic flowchart of a data transmission method according to an embodiment of this application;
FIG. 6 is a schematic block diagram of an example of a communication apparatus according to this application;
FIG. 7 is a schematic diagram of a structure of a terminal device to which an embodiment of this application is applicable;
FIG. 8 is a schematic diagram of a structure of a network device to which an embodiment of this application is applicable; and
FIG. 9 is a schematic diagram of a structure of a device that performs machine learning to which an embodiment of this application is applicable.

### DESCRIPTION OF EMBODIMENTS

Technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) communication system, a future new radio (new radio, NR) access technology, vehicle-to-everything (vehicle-to-x V2X) communication, Internet of Vehicles, machine type communication (machine type communication, MTC), or Internet of Things (Internet of Things, IoT). V2X may include vehicle to network (vehicle to network, V2N), vehicle to vehicle (vehicle to vehicle, V2V), vehicle to infrastructure (vehicle to infrastructure, V2I), and/or vehicle to pedestrian (vehicle to pedestrian, V2P), and the like.

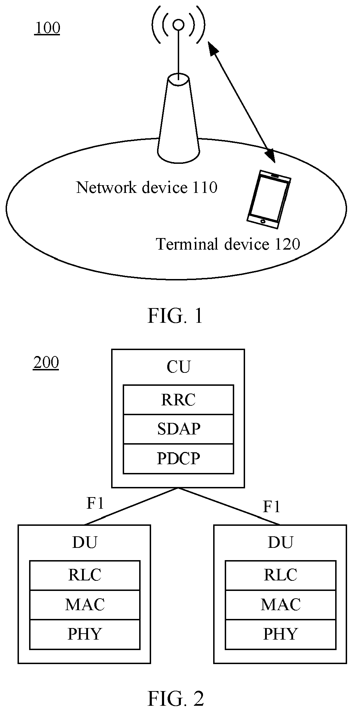

FIG. 1 is a schematic diagram of a wireless communication system 100 to which an embodiment of this application is applicable.

As shown in FIG. 1, the wireless communication system 100 may include at least one network device, for example, a network device 110 shown in FIG. 1. The at least one network device includes one or more network devices that are devices that perform machine learning. The wireless communication system 100 may further include at least one terminal device, for example, a terminal device 120 shown in FIG. 1. According to the solution provided in this embodiment of this application, a device that performs machine learning in the system 100 configures the terminal device to collect data used for machine learning. The terminal device collects, based on the configuration, the data used for machine learning, sends the data to a network, and provides auxiliary information. A device in a network may collect, based on the auxiliary information provided by the terminal device, terminal data and forward the data to a device that performs machine learning, so that the device that performs machine learning performs machine learning based on the data from the terminal device. This solution enables machine learning to be applied to mobile networks, so that the network provides better communication services to implement RAN intelligence.

The terminal device in this embodiment of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in this embodiment of this application may be a mobile phone (mobile phone), a tablet (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement all or some functions without depending on smartphones, such as smart watches or smart glasses, and devices that focus on only one type of application and need to work with other devices such as smartphones, such as various smart bands or smart jewelry for monitoring physical signs.

In addition, the terminal device may alternatively be a terminal device in an internet of things (internet of things, loT) system. An IoT is an important part in future development of information technologies. A main technical feature of the IoT is to connect things to a network by using a communication technology, to implement an intelligent network for human-machine interconnection and thing-thing interconnection.

It should be understood that a specific form of the terminal device is not limited in this embodiment of this application.

The network device in this embodiment of this application may be a device having a wireless transceiver function. The device includes but is not limited to: a base station, an evolved NodeB (evolved NodeB, eNB), a radio network controller (radio network controller, RNC), a NodeB (NodeB, NB), a base station controller (base station controller, BSC), abase transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. The device may alternatively be an access network (radio access network, RAN) device in a 5G (for example, NR) system, for example, a next generation base station (generation NodeB, gNB), a TRP, or a TP, or one or a group of (including a plurality of antenna panels) antenna panels of a base station in the 5G system.

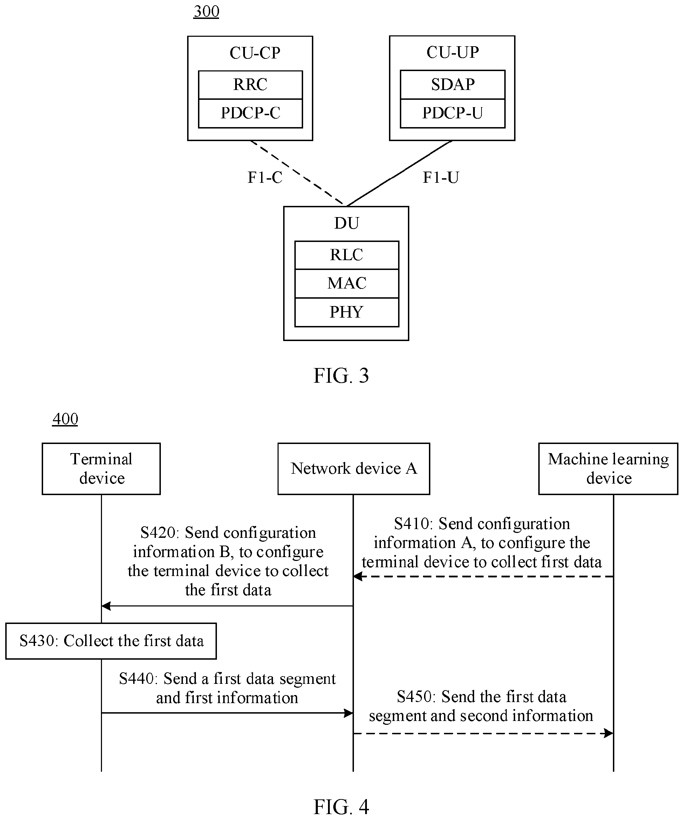

In some deployments, the gNB may include a central unit (central unit, CU) and a distributed unit (distributed unit, DU), as shown in FIG. 2. The gNB may further include an active antenna unit (active antenna unit, AAU for short). The CU implements some functions of the gNB, and the DU implements some functions of the gNB. The CU may be responsible for processing non-real-time protocols and services. For example, the CU may implement functions of a radio resource control (radio resource control, RRC) layer, a service data adaptation protocol (service data adaptation protocol, SDAP) layer, and/or a packet data convergence protocol (packet data convergence protocol, PDCP) layer. The DU is responsible for processing physical layer protocols and real-time services. For example, the DU may implement functions of a radio link control (radio link control, RLC) layer, a media access control (media access control, MAC) layer, and a physical (physical, PHY) layer. One DU may be connected to only one CU or a plurality of CUs, and one CU may be connected to a plurality of DUs. The CU and the DU may communicate with each other through an F1 interface. The AAU implements some physical layer processing functions, radio frequency processing, and a function related to an active antenna. Information at the RRC layer is eventually submitted to the PHY layer and is converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, a CU-CP node, a CU-UP node, and an AAU node. In addition, the CU may be classified into a network device in an access network (radio access network, RAN), or the CU may be classified into a network device in a core network (core network, CN). This is not limited in this application. As shown in FIG. 3, the CU may further include a CU-control plane (CU-control plane, CU-CP) node and a CU-user plane (CU-user plane, CU-UP) node. The CU-CP may be responsible for a control plane function, for example, implementing an RRC layer and a PDCP layer control plane function (PDCP-C). The CU-UP may be responsible for a user plane function, for example, implementing an SDAP layer and a PDCP layer user plane function (PDCP-U). The CU-CP and the CU-UP communicate with each other through an E1 interface. On behalf of the gNB, the CU-CP may communicate with a core network through an NG interface, and communicate with a DU through an F1-C interface. The CU-UP may communicate with the DU through an F1-U interface. In another implementation, the CU-UP may implement a function of the PDCP-C. However, this application is not limited thereto.

The network device in this embodiment of this application may alternatively be a CU node or a DU node that constitutes the gNB, or the network device may alternatively be a CU-CP node or a CU-UP node that constitutes the CU. However, this application is not limited thereto.

The network device provides a service in a cell. A terminal device communicates with the network device in the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cells herein may include a metro cell (metro cell), a micro cell (micro cell), a pico cell (pico cell), a femto cell (femto cell), and the like. These small cells are characterized by small coverage and low transmit power, and are applicable to providing a high rate data transmission service.

Artificial intelligence (artificial intelligence, AI) can simulate a nonlinear model, and therefore can effectively adapt to the actual environment and approach the performance limit. In this embodiment of this application, artificial intelligence (for example, machine learning (machine learning, ML)) is applied to a mobile network, so that network planning, network configuration, and resource scheduling efficiency can be greatly improved, and network intelligence can be implemented. However, artificial intelligence (for example, machine learning) needs to obtain a large amount of data, perform model training and/or decision inference on the obtained data by using a machine learning algorithm, and output an AI model and/or a decision result. In the mobile network, according to the method provided in embodiments of this application, the terminal device can send massive data used for machine learning to a network side, and a device that performs machine learning in the network performs machine learning after receiving the data, so that the network provides a better communication service for the terminal device based on a machine learning result, to implement RAN intelligence.

The following describes definitions in embodiments of this application.

### 1. Artificial intelligence

Artificial intelligence AI enables machines to learn and accumulate experience, so that the machines can resolve problems such as natural language understanding, image recognition, and chess playing that are resolved by humans through experience.

### 2. Machine learning

Machine learning is an implementation of artificial intelligence, and is a method that provides learning capabilities for machines to complete functions that cannot be implemented by direct programming. In practice, machine learning is a method of training a model by using data, and then using the model to predict a result. Reinforcement learning is a field of machine learning that emphasizes how to act based on the environment to maximize expected benefits. Transfer learning is another field of machine learning. Transfer learning focuses on storing solution models of existing problems and leveraging the solution models on other different but related problems.

### 3. Training (training) or learning

Training is a processing process in which parameters, such as weighted values, in an AI model or ML model are optimized to enable the model to perform a specific task. Embodiments of this application are applicable to but are not limited to one or more of the following training methods: supervised learning, unsupervised learning, reinforcement learning, transfer learning, and the like. Supervised learning uses a group of training samples that have been correctly labeled for training (where the training samples that have been correctly labeled means that each sample has an expected output value). Unlike supervised learning, unsupervised learning is a method that automatically classifies or groups input data without giving a pre-marked training sample.

### 4. Inference (inference)

Inference means using a trained AI model or ML model to execute a task, and inputting actual data into the AI model or ML model for processing to obtain a corresponding prediction result. The prediction result may also be referred to as an inference result or a decision result.

### 5. Federated learning (federated learning)

Federated learning is a distributed AI training method that a training process of an AI algorithm is performed on a plurality of devices instead of being aggregated to one server, so that time consumption and a large quantity of communication overheads caused by data collection during centralized AI training can be resolved. In addition, because device data does not need to be sent to the server, privacy security problems can also be reduced. A specific process is as follows: A central node sends an AI model to a plurality of participant nodes, and the participant nodes perform AI model training based on data of the participant nodes, and report the AI model trained by the participant nodes to the central node in a gradient manner. The central node performs averaging or another operation on gradient information fed back by the plurality of participant nodes, to obtain a new AI model. Optionally, the central node may send the updated AI model to the plurality of participant nodes, so that the participant nodes re-perform AI model training. In different federated learning processes, the participant nodes selected by the central node may be the same or may be different. This is not limited.

It may be understood that embodiments of this application are applicable to federated learning. For example, both a network device and a terminal device participating in machine learning such as AI model training are applicable to centralized learning. For example, after the terminal device reports collected data, the network device performs centralized AI model training. However, this application is not limited thereto. The solutions in this application are also applicable to another model training manner or an AI algorithm.

In embodiments of this application, "/" may represent an "or" relationship between associated objects. For example, A/B may represent A or B. "And/or" may be used to indicate that there are three relationships between associated objects. For example, A and/or B may represent the following three cases: Only A exists, both A and B exist, and only B exists. A and B may be singular or plural. To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

In embodiments of this application, "at least one (type)" may alternatively be described as "one (type) or more (types)", and "a plurality of (types)" may be two (types), three (types), four (types), or more (types). This is not limited in embodiments of this application.

The following describes a data transmission method provided in embodiments of this application in detail with reference to the accompanying drawings.

It should be understood that, in embodiments of this application, a terminal device and/or a network device and/or a machine learning device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily performed.

FIG. 4 is a schematic flowchart of a data transmission method according to an embodiment of this application.

In this embodiment of this application, a device that performs machine learning (referred to as a machine learning device below) is disposed on a network side. The machine learning device may configure a terminal device to collect data used for machine learning, and perform machine learning based on the data collected by the terminal device to optimize a network service. In an implementation, the machine learning device may be a network device (for example, a first network device in FIG. 4) that establishes a wireless connection to the terminal device. In another implementation, the machine learning device may be independent of the first network device. The machine learning device independent of the first network device may be referred to as an artificial intelligence control/controller (artificial intelligence control/controller, AIC), a radio intelligent control/controller (radio intelligence control/controller, RIC), or another name. This is not limited.

Optionally, when the machine learning device is independent of the first network device, the machine learning device performs S410.

S410: The machine learning device sends configuration information A to a network device A, where the configuration information A is used to configure the terminal device to collect first data.

Correspondingly, the network device A receives the configuration information A from the machine learning device. The first data is data used for machine learning.

By way of example but not limitation, the first data may be training data, a model parameter gradient (information), or an inference result.

The training data is used for model training in machine learning. For example, the training data may be at least one of raw data collected or measured by the terminal device, data obtained by performing processing (for example, normalization (normalization)) on the raw data, and feature engineering data (which is feature data used to represent the raw data). The model parameter gradient may be a gradient of an updated AI model parameter that is obtained by a participant node for machine learning and that is relative to an AI model parameter that is not updated. An updated AI model is obtained by the participant node by performing AI model training based on an AI model that is not updated and training data collected (or measured) by the participant node. The inference result may be an inference result obtained by inputting actual data into an AI model for inference during application.

Optionally, the configuration information A may indicate, to the terminal device, a cell in which the first data is collected or a first area in which the first data is collected. The first area includes at least one cell.

For example, the configuration information A includes an identifier of a cell, indicating the cell in which the terminal device collects the first data. The machine learning device notifies, based on the configuration information A, the network device A of the cell in which the terminal device needs to collect the first data, and the network device A forwards the configuration information A to the terminal device. Alternatively, the network device A transparently transmits the configuration information A to the terminal device, so that the terminal device determines, based on the identifier of the cell in the configuration information A, the cell for collecting the first data, and collects the first data in the cell corresponding to the identifier of the cell. However, this application is not limited thereto.

By way of example but not limitation, the identifier of the cell may be at least one of the following:
a cell global identifier (cell global identifier, CGI), a physical cell identifier (physical cell identifier, PCI) and a frequency, a cell identifier (cell identifier), a non-public network identifier (non-public network identifier, NPN ID), and a non-terrestrial network identifier (non-terrestrial network identifier, NTN ID).

For another example, the configuration information A includes an identifier of a first area, and the first area includes one or more cells. After obtaining the identifier of the first area, the terminal device collects the first data when in a coverage range of the cell in the first area. However, this application is not limited thereto. Optionally, when the configuration information does not include the area identifier, the terminal device may consider that the first data is collected in a serving cell.

By way of example but not limitation, the identifier of the first area is an identifier of at least one cell included in the first area, and/or the identifier of the first area is at least one of a machine learning area identifier, a tracking area code (tracking area code, TAC), a radio access network notification area code (radio access network notification area code, RANAC), a slice identifier, a service identifier, or other identification information that can identify an area.

Optionally, the configuration information A includes indication information A, and the indication information A indicates whether collecting the first data is a cell-level task or an area-level task.

For example, when the indication information A indicates that collecting the first data is a cell-level task, the terminal device may consider that the network configures the terminal device to collect the first data in a serving cell in which the configuration information A is received; or the configuration information A includes the cell identifier, and the terminal device collects the first data in a cell corresponding to the cell identifier. Alternatively, when the indication information A indicates that collecting the first data is an area-level task, the terminal device may consider that the network configures the terminal device to collect the first data in an area of a serving cell in which the configuration information A is received; or the configuration information A includes the identifier of the first area, and the terminal device collects the first data in the first area. However, this application is not limited thereto.

Optionally, the configuration information A indicates a first identifier, and the first identifier is an identifier of the machine learning device.

For example, the configuration information A includes identifier of the machine learning device, to identify the machine learning device that configures the terminal device to collect the first data.

Optionally, the configuration information A includes related information of one or more tasks, including related information of a first task. The first task is a task for collecting the first data.

The related information of the first task may include one or more of the following:
an identifier of the first task, a name of the first task, a type of the first task, and an action type of the first task.

The identifier of the first task is used to identify the first task. In other words, the identifier of the first task indicates the task for collecting the first data.

The type of the first task may be: collecting raw data (or referred to as raw data collection), releasing a model, training a model, and performing inference and releasing an inference result.

For example, if the type of the first task is collecting raw data, it indicates that the first data is the raw data, and the first task is a task for collecting the raw data. Alternatively, the type of the first task is releasing a model, it indicates that the first data is a model parameter (for example, gradient information), and the first task is a task for collecting model parameter information. However, this application is not limited thereto.

Optionally, the type of the first task in the configuration information A may be replaced with a type of the first data. The type of the first data may indicate a type of data that needs to be collected by the terminal device. In other words, the type of the first data indicates that the first task is a task for collecting data of the type. Optionally, the type of the first data indicates that the first data is one or more of training data, a model parameter gradient (information), or an inference result.

The action type of the first task may include one of a plurality of actions. The plurality of actions include one or more of the following actions: start, pause, continue, activate, and deactivate. The action type of the first task may also be referred to as a status of the first task.

Optionally, the configuration information A may include a condition for reporting the first data, and a data parameter or a data set that needs to be collected.

For example, the configuration information A indicates a condition for reporting the model parameter gradient, and/or a parameter of a neural network on which model training is performed.

Optionally, the configuration information A indicates at least one group of measurement types, and optionally, the configuration information A further indicates a measurement reporting manner.

For the measurement type, refer to the measurement type in the 3rd Generation Partnership Project (3rd generation partnership project, 3GPP) technology agreement 37.320. However, this application is not limited thereto. Alternatively, the measurement type may be a measurement type newly added based on a requirement for applying machine learning to a mobile network. The measurement reporting manner may be periodic, one-time, event-triggered, or buffered reporting. The buffered reporting may be a mechanism in which a terminal device in a non-connected state collects first data, stores the first data, and sends the first data to a network device or a machine learning device after the terminal device enters a connected state. A specific measurement reporting manner may be configured based on the configuration information A. This is not limited in this application.

S420: The network device A sends configuration information B to the terminal device, where the configuration information B is used to configure the terminal device to collect the first data.

Correspondingly, the terminal device receives the configuration information B from the network device A.

The configuration information B indicates one or more of the following content:
the cell in which the terminal device collects the first data, the first area for collecting the first data, the identifier of the machine learning device, the related information of the first task, the condition for reporting the first data, a training reference parameter, and a training reference data set.

The related information of the first task indicates one or more information of the identifier of the first task, the name of the first task, the type of the first task, and the action type of the first task.

In an implementation, the network device A is a device that can perform machine learning.

The network device A sends the configuration information B to the terminal device based on a machine learning task requirement, to notify the terminal device to collect the first data.

In another implementation, the network device A determines, based on the configuration information A received from the machine learning device in S410, that the machine learning device requires the terminal device to collect the first data.

Optionally, after processing the configuration information A, the network device A generates the configuration information B based on the configuration information A, and sends the configuration information B to the terminal device. Alternatively, after receiving the configuration information A, the network device A does not perform processing, but transparently transmits the configuration information A to the terminal device, and the configuration information B is the configuration information A. In other words, the network device A does not read specific parameter content configured by the machine learning device for the terminal device.

S430: The terminal device collects the first data.

In S420, the terminal device receives the configuration information B from the network device A, and determines, based on the configuration information B, the device that performs machine learning to configure the terminal device to collect the first data, or determines, based on the configuration information B, that the terminal device needs to report the first data to the network device A. The terminal device collects the first data based on the configuration information B.

For example, the configuration information B includes the identifier of the first area, and the first area includes a plurality of cells. The configuration information B indicates the terminal device to collect and report raw data used for training, and further configures a measurement type and uses periodic reporting as the measurement reporting manner. In this case, when in a coverage range of the first area, the terminal device collects, based on the configured measurement type, the raw data (which is an example of the first data) used for training, and periodically reports the collected first data in an indicated measurement reporting manner.

S440: The terminal device sends a data segment A (which is an example of a first data segment) and first information to the network device A.

Correspondingly, the network device A receives the data segment A and the first information from the terminal device. The data segment A is one of one or more data segments corresponding to the first data. The terminal device may send the first data to the network device A as a data segment; or the terminal device sends the first data in segments. For example, the first data is divided into a plurality of data segments, and each data segment includes a part of the first data. The data segment may be referred to as a data block, a data fragment, or a data packet. This is not limited in this application.

For example, if a data volume of the first data used for machine learning is large and the first data cannot be sent to the network device A at a time, the terminal device sends the first data in segments. Alternatively, the device that performs machine learning configures the terminal device to periodically report the first data, and the terminal device collects the data segment A of the first data within one period, and reports the data segment A to the network device.

The first information indicates a target device of the data segment A. The target device is the device that performs machine learning. The device that performs machine learning may perform model training and/or inference based on the first data.

When the network device A performs machine learning, the target device is the network device A. When the device that performs machine learning is not the network device A, for example, when the machine learning device in FIG. 2 performs machine learning, the target device is the machine learning device.

Optionally, the first information includes the identifier of the first task and/or a first identifier, and the first identifier is used to identify the device that performs machine learning.

For example, the first information includes the identifier of the first task, so that after receiving the first information, the network device A determines a task corresponding to the first data, for example, determines, based on the identifier of the first task, that the first data is a machine learning task configured by the machine learning device for the terminal device, and forwards the first data to the machine learning device. Alternatively, the network device A is the device that performs machine learning, and the network device A determines, based on a task identifier in the first information, that the first data is data of the first task configured by the network device A for the terminal device. However, this application is not limited thereto.

For another example, the first information includes the first identifier, so that the network device A determines a target device of the first data based on the first identifier. If the network device A is the device that performs machine learning, the first identifier is an identifier of the network device A. If the device that performs machine learning is the machine learning device in FIG. 4 rather than the network device A, the network device A determines that the first data needs to be forwarded to the machine learning device. However, this application is not limited thereto.

Optionally, the first data and the first information are carried in a first message sent by the terminal device to the network device A, and the first message further includes second information. Optionally, the first information and the second information may alternatively be carried in different messages. The second information indicates one or more of the following:
a sequence number of the data segment A in the one or more data segments corresponding to the first data;
information indicating whether the data segment A is a last data segment in the one or more data segments corresponding to the first data; and
first duration, where the first duration is a time length from a moment at which the terminal device generates or stores the data segment A to a moment at which the terminal device sends the data segment A.

According to the foregoing solution, the second information includes a sequence number of a data segment, so that after receiving the data segment A, the device that performs machine learning may sort a plurality of data segments of the first data based on the sequence number, to correctly read the first data. The second information indicates whether the data segment A is the last data segment corresponding to the first data, so that the device that performs machine learning may determine whether all data segments corresponding to the first data are received, to decode or analyze the first data. The second information may further indicate the first duration, so that after receiving the first duration, the device that performs machine learning may determine whether the first data is valid.

Optionally, the second information further indicates whether a cell A is a cell in a second area. The cell A is managed by the network device A, and is a current serving cell of the terminal device.

For example, when the terminal device indicates that the cell A is the cell in the second area, the network device A determines that the first data segment may be forwarded to a device that corresponds to the network device A (or that establishes a connection to the network device A) and that performs machine learning.

By way of example but not limitation, the first message is a radio resource control (radio resource control, RRC) message. That is, the first data is control plane data.

The first duration may be specifically a duration from a moment at which the terminal device generates or stores the data segment A (for example, a moment at which the data segment A is stored in a memory of the terminal device) to a moment at which the RRC message is sent, or the first duration may be specifically a duration from a moment at which the terminal device receives the configuration information B to a moment at which the terminal device sends the first message. However, this application is not limited thereto.

In an implementation, the network device A is a gNB. After the gNB receives the RRC message (which is an example of the first message) from the terminal device, an RRC protocol layer of the gNB processes the first message.

For example, after collecting the first data, the terminal device segments the first data and generates an RRC message, where the RRC message includes the first data segment and the first information. After the gNB receives the RRC message, the RRC protocol layer processes the first message, for example, reads the first information in the first message to determine the target device.

For another example, the gNB is the device that performs machine learning. After the gNB receives the RRC message from the terminal device, the RRC protocol layer determines, based on the first message, whether all data segments of the first data are received. After receiving all the data segments of the first data, the gNB performs machine learning based on the first data. However, this application is not limited thereto.

In another implementation, the network device A is a CU node or a CU-CP node that is included in the gNB, and after the CU node or the CU-CP node receives the RRC message from the terminal device, an RRC protocol layer processes the first message.

For example, the network device A is the CU-CP node. After receiving the first message, the CU-CP node processes the first message at the RRC protocol layer, for example, reads the first information in the first message to determine the target device.

For another example, the CU-CP node is the device that performs machine learning. After the CU-CP node receives the RRC message from the terminal device, the RRC protocol layer determines, based on the first message, whether all data segments of the first data are received. After receiving all the data segments of the first data, the CU-CP node performs machine learning based on the first data. However, this application is not limited thereto.

By way of example but not limitation, the first message is layer 2 control signaling. The layer 2 control signaling may be at least one of a PDCP layer control protocol data unit (protocol data unit, PDU), an RLC layer control PDU, and a MAC control element (control element, CE).

In an implementation, the network device A is a DU node or includes a CU node and a DU node that is included in or are included in a gNB. After the DU node receives the layer 2 control signaling from the terminal device, a corresponding layer 2 protocol layer processes the layer 2 signaling message.

For example, the network device A is the DU node. After receiving the first message, the DU node processes the first message at the corresponding layer 2 protocol layer (for example, RLC or MAC), for example, reads the first information in the first message to determine the target device.

For another example, the DU node is the device that performs machine learning. After the DU node receives the layer 2 signaling message from the terminal device, the corresponding layer 2 protocol layer determines, based on the layer 2 signaling message, whether all data segments of the first data are received. After receiving all the data segments of the first data, the DU node performs machine learning based on the first data. However, this application is not limited thereto.

When the network device A is the device that performs machine learning, after receiving the first data in the foregoing step, the network device A performs machine learning by using the first data.

For example, when the network device A configures the terminal device to collect training data, the network device performs model training based on the obtained first data to obtain a trained model, to provide a better network service by using the trained model. However, this application is not limited thereto.

For another example, the first data is an inference result obtained by the terminal device based on a trained model, and the network device A determines, based on the inference result, whether a parameter of the model used by the terminal device needs to be adjusted, or whether to further optimize the trained model. However, this application is not limited thereto.

When the network device A is not the device that performs machine learning, the network device A performs S450.

S450: The network device A sends the data segment A and the second information to the machine learning device.

Optionally, the machine learning device sorts the received data segments based on the sequence number of the data segment A in the second information. When the second information indicates whether the data segment A is the last data segment corresponding to the first data, the machine learning device determines, based on the second information, whether all the data segments corresponding to the first data are received.

Correspondingly, the machine learning device receives the data segment A and the second information from the network device A. After receiving all the data segments of the first data, the machine learning device performs machine learning based on the first data.

According to the foregoing solution, a network device configures the terminal device to collect data used for machine learning, and the terminal device performs data collection based on the configuration of the network. The terminal device reports the collected data to the network device, as well as auxiliary information indicating a target device corresponding to the data, so that the network device can determine the target device of the data based on the auxiliary information. When a data volume used for machine learning is relatively large, the terminal device may report data to the network in segments, and the auxiliary information may further indicate a sequence number of a data segment and/or whether the data segment is a last data segment, so that after receiving the auxiliary information, a device that performs machine learning in the network can sort data segments and determine whether all data segments of the first data are received. In this way, massive data can be accurately transmitted to the device that performs machine learning in the network, so that the network can provide a better communication service based on a machine learning result, to implement RAN intelligence.

An embodiment of this application further provides a data transmission method, to consider, when cell handover occurs, how a terminal device reports data used for machine learning to a device that performs machine learning, to avoid a waste of collected data and improve communication efficiency.

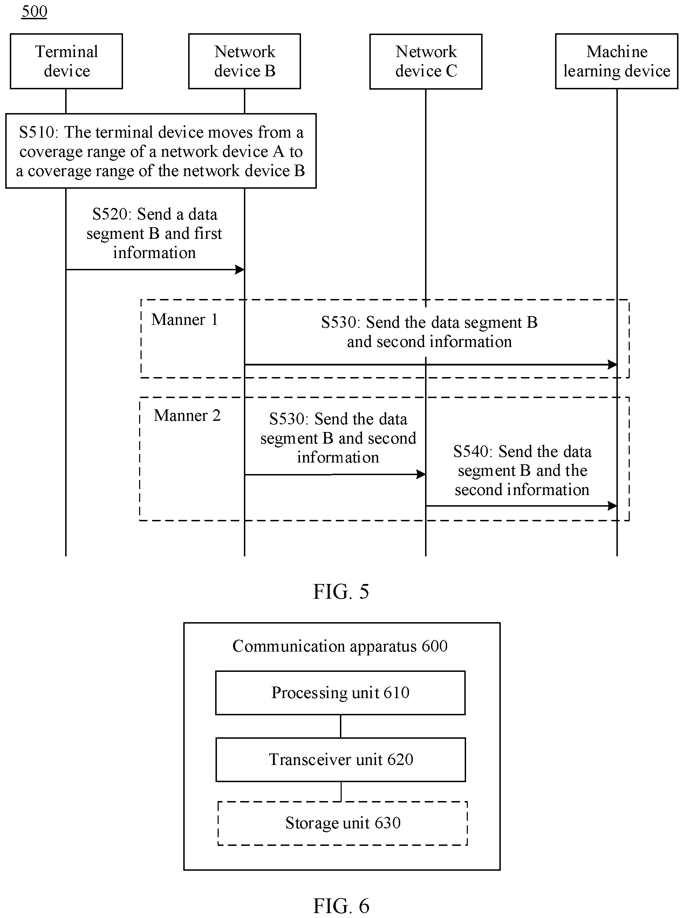

FIG. 5 is another schematic flowchart according to an embodiment of this application.

It should be noted that, if no other definition or description is provided, for parts in the embodiment in FIG. 5 that are the same as or similar to those in the embodiment in FIG. 4, refer to the descriptions in the embodiment in FIG. 4. For brevity, details are not described herein again.

S510: A terminal device moves from a coverage range of a network device A to a coverage range of a network device B.

After collecting the first data or collecting a part of the first data in the embodiment shown in FIG. 4, the terminal device may move to the coverage range of the network device B, or the network device B provides an access service after the terminal device performs cell selection, cell reselection, or handover. The terminal device establishes a wireless connection to the network device B, and a cell B managed by the network device B provides a service for the terminal device. In other words, the cell B managed by the network device B is a current serving cell of the terminal device.

For example, S510 may be performed after S430 and before S440, that is, the terminal device moves after collecting the first data or after collecting a part of the first data. Alternatively, S510 may be performed after S440. For example, the terminal device sends a data segment of a part of the first data to the network device A, and then moves to the cell B. However, this application is not limited thereto.

S520: The terminal device sends a data segment B (which is another example of a first data segment) and first information to the network device B.

Correspondingly, the network device B receives the data segment B and the first information from the terminal device. The data segment B is one of one or more data segments corresponding to the first data. The first information indicates a target device of the data segment B.

Optionally, the first data and the first information are carried in a first message sent by the terminal device to the network device B, and the first message further includes second information. The second information indicates one or more of the following:
an identifier of a first task, where the first task is a task for collecting the first data;
a sequence number of the data segment B in the one or more data segments corresponding to the first data;
information indicating whether the data segment B is a last data segment in the one or more data segments corresponding to the first data; and
first duration, where the first duration is a time length from a moment at which the terminal device generates or stores the data segment B to a moment at which the terminal device sends the data segment B.

By way of example but not limitation, the first message is a radio resource control (radio resource control, RRC) message.

According to the foregoing solution, the terminal device sends the second information. After receiving the second information, a device that performs machine learning may determine, based on the identifier of the first task in the second information, a task corresponding to the data segment B. The device that performs machine learning may further sort the data segments based on sequence numbers, and/or determine, depending on whether the data segment B is the last data segment, whether all the data segments of the first data are received, to decode or analyze the first data and perform machine learning, and when the second information includes the first duration, determine, based on the first duration, whether the first data is valid.

An implementation in which the first information indicates the target device may include but is not limited to the following manners:
Manner 1: The target device is a machine learning device. The first information indicates the machine learning device.

For example, the first information includes an identifier of the machine learning device, and the terminal device indicates, based on the first information, that the target device of the data segment B is the machine learning device. After receiving the first information, the network device B determines, based on the identifier of the machine learning device, to forward the data segment B to the machine learning device corresponding to the identifier. However, this application is not limited thereto.

After determining the machine learning device based on the first information, the network device B performs S530 corresponding to Manner 1 in FIG. 5.

S530: The network device B sends the data segment B and the second information to the machine learning device.

Correspondingly, the machine learning device receives the data segment B and the second information from the network device B.

After the machine learning device receives the data segment B, when the second information indicates the sequence number of the data segment B, the machine learning device may sort the data segments based on the sequence number of the data segment B in the second information. When the second information indicates whether the data segment B is the last data segment of the first data, the machine learning device determines whether all the data segments of the first data are received, to determine whether to decode the first data and perform machine learning based on the first data. When the second information indicates the first duration, the machine learning device may determine, based on the first duration, whether the first data is valid.

Manner 2: The target device is a network device C. The first information indicates the network device C.

Optionally, the network device C may be the network device A that sends configuration information B to the terminal device, or may be another network device having an interface with the device that performs machine learning, or the network device C is the device that performs machine learning.

Optionally, the first information indicates one or more of the following content:
an identifier of the network device C (which is an example of a third network device);
an identifier of a first cell, where the first cell is a cell managed by the network device C; and
an identifier of a second area, where the second area includes at least one cell, and the second area includes the first cell managed by the network device C.

By way of example but not limitation, the identifier of the first cell may be at least one of the following:
a CGI, a PCI and a frequency, a cell identifier (cell identifier), an NPN ID, and an NTN ID.

By way of example but not limitation, the identifier of the second area is an identifier of at least one cell included in the second area, or the identifier of the second area is at least one of a machine learning area identifier, a TAC, a RANAC, a slice identifier, a service identifier, or other identification information that can identify an area.

For example, the first information includes a CGI and a TAC of the first cell. After receiving the first information, the network device B determines, based on the CGI of the first cell, the network device C corresponding to the first cell, and forwards the data segment B to the network device C. Specifically, if there is a direct interface (for example, at least one of F1, X2, Xn, E1, F1-C, F1-U, or an interface between other network devices) between the network device B and the network device C, after determining the corresponding network device C based on the CGI of the first cell, the network device B may send the data segment B to the network device C through the interface between the network devices. If there is no direct interface between the network device B and the network device C, the network device B may send the data segment B, the CGI, and the TAC to the network device C by using a core network device. The core network device may determine a specific forwarding path based on some or all information about the CGI and the TAC. Optionally, the core network device may send network identifier information of the network device B and/or network identifier information of the network device C to the network device C. Further, the core network device may further send a TAC of the network device B and/or a TAC of the network device C to the network device C. Based on this mechanism, the network device C may learn of related information of a network device that sends the first information, so that the network device C optimizes a data forwarding path. For example, the network device C may establish a direct interface with the network device B based on the network identifier information of the network device B or the network identifier information and the TAC of the network device B, so that the network device B may send the data segment B to the network device C through the interface. Alternatively, the core network device may send related information of the network device C to the network device B, and the network device B establishes an interface between the network device B and the network device C based on the related information of the network device C, to send the data segment B to the network device C through the interface. For a specific process, refer to the foregoing descriptions. Details are not described herein again.

Optionally, the network device B may further send the second information to the network device C. It should be understood that this application is not limited to the foregoing forwarding mechanism.

Alternatively, the first information includes the identifier of the second area, and after receiving the first information, the network device B forwards the data segment B to one or more network devices corresponding to a cell in the second area. Specifically, if the network device B may determine that there is a direct interface between the network device B and a network device such as the network device C in the second area, the network device B may forward the data segment B to the network device C through the interface. If the network device B cannot send the data segment B to the network device in the second area through the interface, the network device B may send the data segment B to the network device in the second area by using a core network device connected to the network device B or a machine learning node. However, this application is not limited thereto. Optionally, the network device B may further send the second information to the network device in the second area.

Optionally, the first cell is a cell in which the first data is collected, that is, a cell that is indicated by the configuration information B and in which the terminal device collects the first data.

Optionally, the second area is the first area. To be specific, the second area is an area that is indicated by the configuration information B and in which the terminal device collects the first data.

After determining the network device C based on the first information, the network device B performs S530 corresponding to Manner 2 in FIG. 5.

S530: The network device B sends the data segment B and the second information to the network device C.

Correspondingly, the network device C receives the data segment B and the second information from the network device B.

S540: The network device C sends the data segment B and the second information to the machine learning device.

For example, after receiving the data segment B and the second information in S530, the network device C determines that the data segment B is data used for machine learning, and forwards the data segment B and the second information C to a device that establishes a connection to the network device C and that performs machine learning. However, this application is not limited thereto. Optionally, the network device C may determine, based on the identifier of the first task in the second information, that the data segment B is the data used for machine learning.

For another example, in S520, the first information sent by the terminal device to the network device B indicates both a forwarding device, that is, the network device C, and the target device, that is, the machine learning device. The network device B further indicates, to the network device C in S530, the target device of the data segment B, that is, the machine learning device. After receiving the data segment B and the second information, the network device C sends the data segment B and the second information to the machine learning device in S540 based on the target device indicated by the network device B. However, this application is not limited thereto.

Correspondingly, the machine learning device receives the data segment B and the second information from the network device C in S540. After receiving all the data segments of the first data, the machine learning device performs machine learning based on the first data.

For example, when configuring the terminal device to collect data used for training, the machine learning device performs model training based on the obtained first data to obtain a trained model, to provide a better network service by using the trained model. However, this application is not limited thereto.

For another example, the first data is an inference result obtained by the terminal device based on a trained model, and the machine learning device determines, based on the inference result, whether a parameter of the model used by the terminal device needs to be adjusted, or whether to further optimize the trained model. However, this application is not limited thereto.

According to the foregoing solution, a network device configures the terminal device to collect data used for machine learning, the terminal device performs data collection based on the configuration of the network, and the terminal device reports the collected data to the network device as well as auxiliary information. Even if the terminal device moves to a coverage range of another cell, the network device B can also determine the target device of the first data based on the auxiliary information, so that the network device B forwards the first data to the device that performs machine learning. This avoids a waste of the collected data and improves communication efficiency. In this way, massive data can be accurately transmitted to the device that performs machine learning in the network, so that the network can provide a better communication service based on a machine learning result, to implement RAN intelligence.

The method provided in embodiments of this application is described above in detail with reference to FIG. 2 to FIG. 5. Apparatuses provided in embodiments of this application are described below in detail with reference to FIG. 6 to FIG. 8. To implement functions in the method provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 6 is a schematic block diagram of a communication apparatus according to an embodiment of this application. As shown in FIG. 6, the communication apparatus 600 may include a processing unit 610 and a transceiver unit 620.

In a possible design, the communication apparatus 600 may correspond to the terminal device in the foregoing method embodiments, or may be a chip disposed (or used) in the terminal device, or may be another apparatus, module, circuit, unit, or the like that can implement a method performed by the terminal device.

It should be understood that the communication apparatus 600 may correspond to the terminal device in the methods 400 and 500 according to embodiments of this application, and the communication apparatus 600 may include units configured to perform the methods performed by the terminal device in the method 400 in FIG. 4 and the method 500 in FIG. 5. In addition, the units in the communication apparatus 600 and the foregoing other operations and/or functions are respectively used to implement corresponding procedures in the method 400 in FIG. 4 and the method 500 in FIG. 5.

It should be further understood that when the communication apparatus 600 is the chip disposed (or used) in the terminal device, the transceiver unit 620 in the communication apparatus 600 may be an input/output interface or circuit in the chip, and the processing unit 610 in the communication apparatus 600 may be a processor in the chip.

Optionally, the communication apparatus 600 may further include the processing unit 610. The processing unit 610 may be configured to process instructions or data, to implement a corresponding operation.

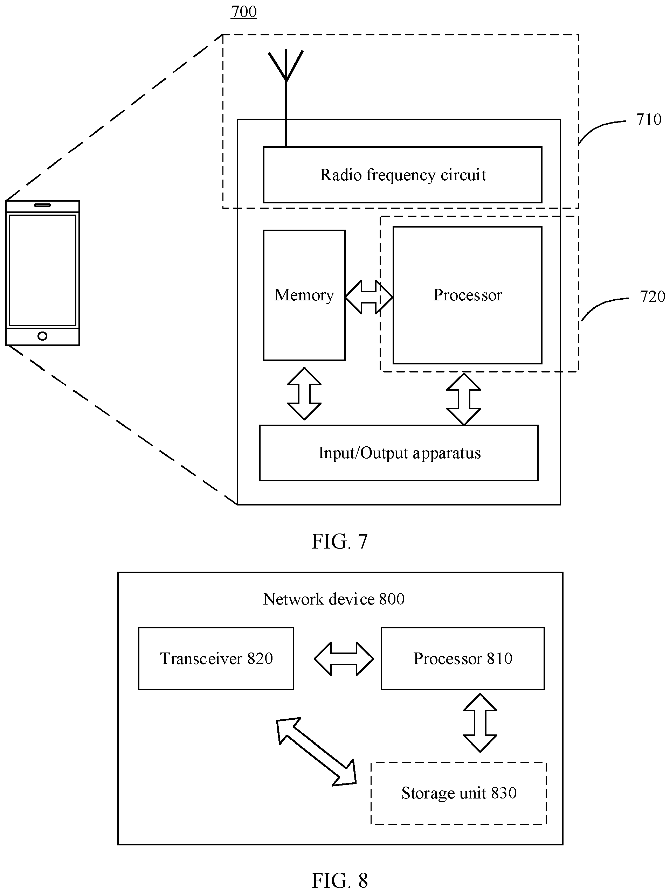

Optionally, the communication apparatus 600 may further include a storage unit 630. The storage unit 630 may be configured to store instructions or data. The processing unit 610 may execute the instructions or the data stored in the storage unit, to enable the communication apparatus to implement a corresponding operation. The transceiver unit 620 in the communication apparatus 600 may correspond to a transceiver 710 in a terminal device 700 shown in FIG. 7, and the storage unit 630 may correspond to a memory in the terminal device 700 shown in FIG. 7.

It should be understood that a specific process in which the units perform the foregoing corresponding steps is described in detail in the foregoing method embodiments. For brevity, details are not described herein again.

It should be further understood that when the communication apparatus 600 is the terminal device, the transceiver unit 620 in the communication apparatus 600 may be implemented through a communication interface (for example, a transceiver or an input/output interface), for example, may correspond to the transceiver 710 in the terminal device 700 shown in FIG. 7. The processing unit 610 in the communication apparatus 600 may be implemented by using at least one processor, for example, may correspond to a processor 720 in the terminal device 700 shown in FIG. 7. The processing unit 610 in the communication apparatus 600 may be implemented by using at least one logical circuit.

In another possible design, the communication apparatus 600 may correspond to the network device in the foregoing method embodiments, or may be a chip disposed (or used) in the network device, or may be another apparatus, module, circuit, unit, or the like that can implement a method performed by the network device.

It should be understood that the communication apparatus 600 may correspond to the network device in the method 400 and the method 500 according to embodiments of this application, for example, the network device A, the network device B, or the network device C. The communication apparatus 600 may include units configured to perform the methods performed by the network device in the method 400 in FIG. 4 and the method 500 in FIG. 5. In addition, the units in the communication apparatus 600 and the foregoing other operations and/or functions are respectively used to implement corresponding procedures in the method 400 in FIG. 4 and the method 500 in FIG. 5.

It should be further understood that when the communication apparatus 600 is the chip disposed (or used) in the network device, the transceiver unit in the communication apparatus 600 may be an input/output interface or circuit in the chip, and the processing unit 610 in the communication apparatus 600 may be a processor in the chip.

Optionally, the communication apparatus 600 may further include the processing unit 610. The processing unit 610 may be configured to process instructions or data, to implement a corresponding operation.

Optionally, the communication apparatus 600 may further include a storage unit 630. The storage unit may be configured to store instructions or data. The processing unit may execute the instructions or the data stored in the storage unit 630, to enable the communication apparatus to implement a corresponding operation. The storage unit 630 in the communication apparatus 600 may correspond to a memory in a network device 800 shown in FIG. 8.

It should be understood that a specific process in which the units perform the foregoing corresponding steps is described in detail in the foregoing method embodiments. For brevity, details are not described herein again.

It should be further understood that when the communication apparatus 600 is the network device, the transceiver unit 620 in the communication apparatus 600 may be implemented through a communication interface (for example, a transceiver or an input/output interface), for example, may correspond to the transceiver 810 in the network device 800 shown in FIG. 8. The processing unit 610 in the communication apparatus 600 may be implemented by using at least one processor, for example, may correspond to a processor 820 in the network device 800 shown in FIG. 8. The processing unit 610 in the communication apparatus 600 may be implemented by using at least one logical circuit.

In another possible design, the communication apparatus 600 may correspond to the device that performs machine learning in the foregoing method embodiments, or may be a chip disposed (or used) in the device that performs machine learning, or may be another apparatus, module, circuit, unit, or the like that can implement a method performed by the device that performs machine learning.

It should be understood that the communication apparatus 600 may correspond to the device that performs machine learning in the methods 400 and 500 according to embodiments of this application, and the communication apparatus 600 may include units configured to perform the methods performed by the device that performs machine learning in the method 400 in FIG. 4 and the method 500 in FIG. 5. In addition, the units in the communication apparatus 600 and the foregoing other operations and/or functions are respectively used to implement corresponding procedures in the method 400 in FIG. 4 and the method 500 in FIG. 5.

It should be further understood that when the communication apparatus 600 is the chip disposed (or used) in the device that performs machine learning, the transceiver unit in the communication apparatus 600 may be an input/output interface or circuit in the chip, and the processing unit 610 in the communication apparatus 600 may be a processor in the chip.

Optionally, the communication apparatus 600 may further include the processing unit 610. The processing unit 610 may be configured to process instructions or data, to implement a corresponding operation.

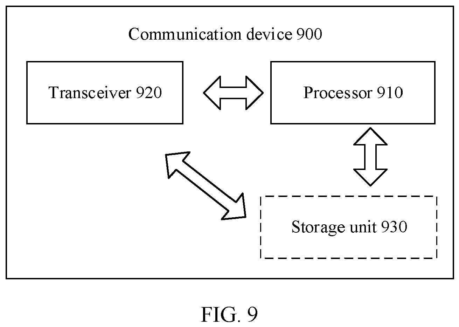

Optionally, the communication apparatus 600 may further include a storage unit 630. The storage unit may be configured to store instructions or data. The processing unit may execute the instructions or the data stored in the storage unit 630, to enable the communication apparatus to implement a corresponding operation. The storage unit 630 in the communication apparatus 600 may correspond to a memory in a device 900 that performs machine learning shown in FIG. 9.

It should be understood that a specific process in which the units perform the foregoing corresponding steps is described in detail in the foregoing method embodiments. For brevity, details are not described herein again.

It should be further understood that when the communication apparatus 600 is the device that performs machine learning, the transceiver unit 620 in the communication apparatus 600 may be implemented through a communication interface (for example, a transceiver or an input/output interface), for example, may correspond to a transceiver 910 in the device 900 that performs machine learning shown in FIG. 9. The processing unit 610 in the communication apparatus 600 may be implemented by using at least one processor, for example, may correspond to a processor 920 in the device 900 that performs machine learning shown in FIG. 9. The processing unit 610 in the communication apparatus 600 may be implemented by using at least one logical circuit.

FIG. 7 is a schematic diagram of a structure of the terminal device 600 according to an embodiment of this application. The terminal device 700 may be used in the system shown in FIG. 1, to perform functions of the terminal device in the foregoing method embodiments. As shown in the figure, the terminal device 700 includes a processor 720 and a transceiver 710. Optionally, the terminal device 700 further includes a memory. The processor 720, the transceiver 710, and the memory may communicate with each other through an internal connection path, to transfer a control signal and/or a data signal. The memory is configured to store a computer program. The processor 720 is configured to execute the computer program in the memory, to control the transceiver 710 to receive and send a signal.

The processor 720 and the memory may be integrated into a processing apparatus. The processor 720 is configured to execute program code stored in the memory, to implement the foregoing function. During specific implementation, the memory may alternatively be integrated into the processor 720, or may be independent of the processor 720. The processor 720 may correspond to the processing unit in FIG. 6.

The transceiver 710 may correspond to the transceiver unit in FIG. 6. The transceiver 710 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 700 shown in FIG. 7 can implement the processes of the terminal device in the method embodiments shown in FIG. 4 and FIG. 5. Operations and/or functions of each module in the terminal device 700 are respectively used to implement the corresponding procedures in the foregoing method embodiment. For details, refer to the descriptions in the foregoing method embodiments. To avoid repetition, detailed descriptions are appropriately omitted herein.

The processor 720 may be configured to perform an action implemented inside the terminal device in the foregoing method embodiments, and the transceiver 710 may be configured to perform a sending action by the terminal device for the network device or a receiving action from the network device in the foregoing method embodiments. For details, refer to the descriptions in the foregoing method embodiments. Details are not described herein again.

Optionally, the terminal device 700 may further include a power supply, configured to supply power to various components or circuits in the terminal device.

In addition, to make functions of the terminal device more perfect, the terminal device 700 may further include one or more of an input unit, a display unit, an audio circuit, a camera, a sensor, and the like, and the audio circuit may further include a speaker, a microphone, and the like.

FIG. 8 is a schematic diagram of a structure of a network device according to an embodiment of this application. The network device 800 may be used in the systems shown in FIG. 1, to perform functions of the network device in the foregoing method embodiments. For example, FIG. 8 may be a schematic diagram of a related structure of the network device.

It should be understood that the network device 800 shown in FIG. 8 can implement processes related to the network device (for example, the network device A, the network device B, or the network device C) in the method embodiments shown in FIG. 4 and FIG. 5. Operations and/or functions of each module in the network device 800 are respectively used to implement corresponding procedures in the foregoing method embodiment. For details, refer to the descriptions in the foregoing method embodiments. To avoid repetition, detailed descriptions are appropriately omitted herein.

It should be understood that the network device 800 shown in FIG. 8 may be an eNB or a gNB. Optionally, the network device includes a network device of a CU, a DU, an AAU, and the like. Optionally, the CU may be specifically classified into a CU-CP and a CU-UP. A specific architecture of the network device is not limited in this application.

It should be understood that the network device 800 shown in FIG. 8 may be a CU node or a CU-CP node.

This embodiment of this application further provides a processing apparatus, including a processor and a (communication) interface. The processor is configured to perform the method according to any one of the foregoing method embodiments.

It should be understood that, the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing (digital signal processing, DSP) circuit, a micro controller unit (micro controller unit, MCU), a programmable controller (programmable logic device, PLD), or another integrated chip.

According to the methods provided in embodiments of this application, this application further provides a computer program product. The computer program product includes computer program code. When the computer program code is executed by one or more processors, an apparatus including the processor is enabled to perform the methods in the embodiments shown in FIG. 4 and FIG. 5.

All or a part of the technical solutions provided in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, a terminal device, a core network device, machine learning device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in embodiments of this application, this application further provides a computer-readable storage medium. The computer-readable storage medium stores program code. When the program code is executed by one or more processors, an apparatus including the processor is enabled to perform the methods in the embodiments shown in FIG. 4 and FIG. 5.

According to the methods provided in embodiments of this application, this application further provides a system, including the foregoing one or more network devices. The system may further include the foregoing one or more terminal devices.

The network device and the terminal device in the foregoing apparatus embodiments completely correspond to the network device and the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division or may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions of embodiments.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method performed by a terminal device, comprising:
receiving, , configuration information from a first network device or a second network device;
configuring, using the received configuration information, the terminal device to collect first data, wherein the first data is data used for machine learning and comprises one or more of the following data: training data, a model parameter gradient, and an inference result;
collecting (S430) the first data using the configured terminal device; and
sending (S440), from the configured terminal device, a first data segment and first information to the first network device, wherein the first data segment is one of one or more data segments corresponding to the first data,- and the first information indicates a target device of the first data segment.

2. The method according to claim 1, wherein the configuration information indicates one or more of the following content:
a cell in which the terminal device collects the first data;
a first area in which the terminal device collects the first data, wherein the first area comprises at least one cell;
a first identifier, used to identify a device that performs machine learning;
an identifier of a first task, wherein the first task is a task for collecting the first data; and
a type of the first task.

3. The method according to any one of claims 1 to 2, wherein the target device is the device that performs machine learning.

4. The method according to any one of claims 1 to 2, wherein the target device is a third network device.

5. The method according to claim 4, wherein that the first information indicates a target device of the first data segment comprises: the first information indicates one or more of the following content:
an identifier of the third network device;
an identifier of a first cell, wherein the first cell is a cell managed by the third network device; and
an identifier of a second area, wherein the second area comprises at least one cell, and the at least one cell comprises the first cell managed by the third network device.

6. The method according to any one of claims 1 to 5, wherein the first information is carried in a first message, the first message further comprises second information, and the second information indicates one or more of the following content:
the identifier of the first task, wherein the first task is the task for collecting the first data;
a sequence number of the first data segment in the one or more data segments;
information indicating whether the first data segment is a last data segment in the one or more data segments;
information indicating whether a second cell is a cell in the second area, wherein the second cell is managed by the first network device, the second cell is a serving cell of the terminal device, and the second area comprises at least one cell; and
first duration, wherein the first duration is a time length from a moment at which the terminal device generates the first data segment to a moment at which the terminal device sends the first data segment.

7. A data transmission method, comprising:
sending (S420), by a first network device, configuration information to a terminal device;
receiving, by the first network device, a first data segment and first information from the terminal device, the terminal device being configured, using the configuration information, to collect first data, wherein the first data is data used for machine learning and comprises one or more of the following data: training data, a model parameter gradient, and an inference result, wherein the first data segment is one of one or more data segments corresponding to the first data, and the first information indicates a target device of the first data segment; and
sending (S450), by the first network device, the first data segment to the target device.

8. The method according to claim 7, wherein the configuration information indicates one or more of the following content:
a cell in which the terminal device collects the first data;
a first area in which the terminal device collects the first data, wherein the first area comprises at least one cell;
a first identifier, used to identify a device that performs machine learning;
an identifier of a first task, wherein the first task is a task for collecting the first data; and
a type of the first task.

9. The method according to any one of claims 7 to 8, wherein the target device is the device that performs machine learning.

10. The method according to any one of claims 7 to 8, wherein the target device is a third network device.

11. The method according to claim 10, wherein the first information indicates one or more of the following content:
an identifier of the third network device;
an identifier of a first cell, wherein the first cell is a cell managed by the third network device; and
an identifier of a second area, wherein the second area comprises at least one cell, and the at least one cell comprises the first cell managed by the third network device.

12. A terminal device (600), comprising a processor (610) and a memory (630), wherein the memory is coupled to the processor, and the processor is configured to perform the method according to any one of claims 1 to 6.

13. A first network device (600), comprising a processor (610) and a memory (630), wherein the memory is coupled to the processor, and the processor is configured to perform the method according to any one of claims 7 to 11.

## Patentansprüche

1. Datenübertragungsverfahren, das von einem Endgerät durchgeführt wird, umfassend:
Empfangen von Konfigurationsinformationen von einem ersten Netzwerkgerät oder einem zweiten Netzwerkgerät;
Konfigurieren, unter Verwendung der empfangenen Konfigurationsinformationen, des Endgeräts dazu, erste Daten zu erfassen, wobei die ersten Daten Daten sind, die für maschinelles Lernen verwendet werden, und eines oder mehrere der folgenden Daten umfassen: Trainingsdaten, einen Modellparametergradienten und ein Inferenzergebnis;
Erfassen (S430) der ersten Daten unter Verwendung des konfigurierten Endgeräts; und
Senden (S440), von dem konfigurierten Endgerät, eines ersten Datensegments und erster Informationen an das erste Netzwerkgerät, wobei das erste Datensegment eines von einem oder mehreren Datensegmenten ist, die den ersten Daten entsprechen, und die ersten Informationen ein Zielgerät des ersten Datensegments anzeigen.

2. Verfahren nach Anspruch 1, wobei die Konfigurationsinformationen einen oder mehrere der folgenden Inhalte anzeigen:
eine Zelle, in der das Endgerät die ersten Daten erfasst;
einen ersten Bereich, in dem das Endgerät die ersten Daten erfasst, wobei der erste Bereich mindestens eine Zelle umfasst;
eine erste Kennung, die dazu verwendet wird, ein Gerät, das maschinelles Lernen durchführt, zu identifizieren;
eine Kennung einer ersten Aufgabe, wobei die erste Aufgabe eine Aufgabe zum Erfassen der ersten Daten ist; und
einen Typ der ersten Aufgabe.

3. Verfahren nach einem der Ansprüche 1 bis 2, wobei das Zielgerät das Gerät ist, das maschinelles Lernen durchführt.

4. Verfahren nach einem der Ansprüche 1 bis 2, wobei das Zielgerät ein drittes Netzwerkgerät ist.

5. Verfahren nach Anspruch 4, wobei Anzeigen eines Zielgeräts des ersten Datensegments durch die ersten Informationen Folgendes umfasst: die ersten Informationen zeigen einen oder mehrere der folgenden Inhalte an:
eine Kennung des dritten Netzwerkgeräts;
eine Kennung einer ersten Zelle, wobei die erste Zelle eine Zelle ist, die von dem dritten Netzwerkgerät verwaltet wird; und
eine Kennung eines zweiten Bereichs, wobei der zweite Bereich mindestens eine Zelle umfasst und die mindestens eine Zelle die erste Zelle umfasst, die von dem dritten Netzwerkgerät verwaltet wird.

6. Verfahren nach einem der Ansprüche 1 bis 5, wobei die ersten Informationen in einer ersten Nachricht übermittelt werden, die erste Nachricht ferner zweite Informationen umfasst und die zweiten Informationen einen oder mehrere der folgenden Inhalte anzeigen:
die Kennung der ersten Aufgabe, wobei die erste Aufgabe die Aufgabe zum Erfassen der ersten Daten ist;
eine Sequenznummer des ersten Datensegments in dem einen oder den mehreren Datensegmenten;
Informationen, die anzeigen, ob das erste Datensegment ein letztes Datensegment in dem einen oder den mehreren Datensegmenten ist;
Informationen, die anzeigen, ob eine zweite Zelle eine Zelle in dem zweiten Bereich ist, wobei die zweite Zelle von dem ersten Netzwerkgerät verwaltet wird, die zweite Zelle eine bedienende Zelle des Endgeräts ist und der zweite Bereich mindestens eine Zelle umfasst; und
erste Dauer, wobei die erste Dauer eine Zeitspanne von einem Zeitpunkt ist, an dem das Endgerät das erste Datensegment erzeugt, bis zu einem Zeitpunkt, an dem das Endgerät das erste Datensegment sendet.

7. Datenübertragungsverfahren, umfassend:
Senden (S420), durch ein erstes Netzwerkgerät, von Konfigurationsinformationen an ein Endgerät;
Empfangen, durch das erste Netzwerkgerät, eines ersten Datensegments und erster Informationen von dem Endgerät, wobei das Endgerät unter Verwendung der Konfigurationsinformationen dazu konfiguriert ist, erste Daten zu sammeln, wobei die ersten Daten Daten sind, die für maschinelles Lernen verwendet werden, und eines oder mehrere der folgenden Daten umfassen:
Trainingsdaten, einen Modellparametergradienten und ein Inferenzergebnis, wobei das erste Datensegment eines von einem oder mehreren Datensegmenten ist, die den ersten Daten entsprechen, und die ersten Informationen ein Zielgerät des ersten Datensegments anzeigen; und
Senden (S450), durch das erste Netzwerkgerät, des ersten Datensegments an das Zielgerät.

8. Verfahren nach Anspruch 7, wobei die Konfigurationsinformationen einen oder mehrere der folgenden Inhalte anzeigen:
eine Zelle, in der das Endgerät die ersten Daten erfasst;
einen ersten Bereich, in dem das Endgerät die ersten Daten erfasst, wobei der erste Bereich mindestens eine Zelle umfasst;
eine erste Kennung, die dazu verwendet wird, ein Gerät, das maschinelles Lernen durchführt, zu identifizieren;
eine Kennung einer ersten Aufgabe, wobei die erste Aufgabe eine Aufgabe zum Erfassen der ersten Daten ist; und
einen Typ der ersten Aufgabe.

9. Verfahren nach einem der Ansprüche 7 bis 8, wobei das Zielgerät das Gerät ist, das maschinelles Lernen durchführt.

10. Verfahren nach einem der Ansprüche 7 bis 8, wobei das Zielgerät ein drittes Netzwerkgerät ist.

11. Verfahren nach Anspruch 10, wobei die ersten Informationen einen oder mehrere der folgenden Inhalte anzeigen:
eine Kennung des dritten Netzwerkgeräts;
eine Kennung einer ersten Zelle, wobei die erste Zelle eine Zelle ist, die von dem dritten Netzwerkgerät verwaltet wird; und
eine Kennung eines zweiten Bereichs, wobei der zweite Bereich mindestens eine Zelle umfasst und die mindestens eine Zelle die erste Zelle umfasst, die von dem dritten Netzwerkgerät verwaltet wird.

12. Endgerät (600), umfassend einen Prozessor (610) und einen Speicher (630), wobei der Speicher mit dem Prozessor gekoppelt ist und der Prozessor dazu konfiguriert ist, das Verfahren nach einem der Ansprüche 1 bis 6 durchzuführen.

13. Erstes Netzwerkgerät (600), umfassend einen Prozessor (610) und einen Speicher (630), wobei der Speicher mit dem Prozessor gekoppelt ist und der Prozessor dazu konfiguriert ist, das Verfahren nach einem der Ansprüche 7 bis 11 durchzuführen.

## Revendications

1. Procédé de transmission de données réalisé par un dispositif terminal, comprenant :
la réception, d'informations de configuration à partir d'un premier dispositif de réseau ou d'un deuxième dispositif de réseau :
la configuration, à l'aide des informations de configuration reçues, du dispositif terminal pour collecter des premières données, dans lequel les premières données sont des données utilisées pour l'apprentissage automatique et comprennent l'une ou plusieurs des données suivantes : des données d'entraînement, un gradient de paramètre de modèle et un résultat d'inférence ;
la collecte (S430) des premières données à l'aide du dispositif terminal configuré ; et
l'envoi (S440), depuis le dispositif terminal configuré, d'un premier segment de données et des premières informations au premier dispositif de réseau, dans lequel le premier segment de données est l'un d'un ou plusieurs segments de données correspondant aux premières données, et les premières informations indiquent un dispositif cible du premier segment de données.

2. Procédé selon la revendication 1, dans lequel les informations de configuration indiquent l'un ou plusieurs des contenus suivants :
une cellule dans laquelle le dispositif terminal collecte les premières données ;
une première zone dans laquelle le dispositif terminal collecte les premières données, dans lequel la première zone comprend au moins une cellule ;
un premier identifiant, utilisé pour identifier un dispositif qui réalise un apprentissage automatique ;
un identifiant d'une première tâche, dans lequel la première tâche est une tâche de collecte des premières données ; et
un type de la première tâche.

3. Procédé selon l'une quelconque des revendications 1 à 2, dans lequel le dispositif cible est le dispositif qui réalise l'apprentissage automatique.

4. Procédé selon l'une quelconque des revendications 1 à 2, dans lequel le dispositif cible est un troisième dispositif de réseau.

5. Procédé selon la revendication 4, dans lequel le fait que les premières informations indiquent un dispositif cible du premier segment de données comprend : les premières informations indiquent l'un ou plusieurs des contenus suivants :
un identifiant du troisième dispositif de réseau ;
un identifiant d'une première cellule, dans lequel la première cellule est une cellule gérée par le troisième dispositif de réseau ; et
un identifiant d'une seconde zone, dans lequel la seconde zone comprend au moins une cellule, et l'au moins une cellule comprend la première cellule gérée par le troisième dispositif de réseau.

6. Procédé selon l'une quelconque des revendications 1 à 5, dans lequel les premières informations sont véhiculées dans un premier message, le premier message comprend également des secondes informations, et les secondes informations indiquent l'un ou plusieurs des contenus suivants :
l'identifiant de la première tâche, dans lequel la première tâche est la tâche de collecte des premières données ;
un numéro de séquence du premier segment de données dans les un ou plusieurs segments de données ;
des informations indiquant le fait de savoir si le premier segment de données est un dernier segment de données dans les un ou plusieurs segments de données ;
des informations indiquant le fait de savoir si une seconde cellule est une cellule dans la seconde zone, dans lequel la seconde cellule est gérée par le premier dispositif de réseau, la seconde cellule est une cellule de desserte du dispositif terminal, et la seconde zone comprend au moins une cellule ; et
une première durée, dans lequel la première durée est une durée allant d'un moment auquel le dispositif terminal génère le premier segment de données à un moment auquel le dispositif terminal envoie le premier segment de données.

7. Procédé de transmission de données, comprenant :
l'envoi (S420), par un premier dispositif de réseau, d'informations de configuration à un dispositif terminal ;
la réception, par le premier dispositif de réseau, d'un premier segment de données et des premières informations provenant du dispositif terminal, le dispositif terminal étant configuré, à l'aide des informations de configuration, pour collecter des premières données, dans lequel les premières données sont des données utilisées pour l'apprentissage automatique et comprennent l'une ou plusieurs des données suivantes : des données d'apprentissage, un gradient de paramètre de modèle et un résultat d'inférence, dans lequel le premier segment de données est l'un d'un ou plusieurs segments de données correspondant aux premières données, et les premières informations indiquent un dispositif cible du premier segment de données ; et
l'envoi (S450), par le premier dispositif de réseau, du premier segment de données au dispositif cible.

8. Procédé selon la revendication 7, dans lequel les informations de configuration indiquent l'un ou plusieurs des contenus suivants :
une cellule dans laquelle le dispositif terminal collecte les premières données ;
une première zone dans laquelle le dispositif terminal collecte les premières données, dans lequel la première zone comprend au moins une cellule ;
un premier identifiant, utilisé pour identifier un dispositif qui réalise un apprentissage automatique ;
un identifiant d'une première tâche, dans lequel la première tâche est une tâche de collecte des premières données ; et
un type de la première tâche.

9. Procédé selon l'une quelconque des revendications 7 à 8, dans lequel le dispositif cible est le dispositif qui réalise l'apprentissage automatique.

10. Procédé selon l'une quelconque des revendications 7 à 8, dans lequel le dispositif cible est un troisième dispositif de réseau.

11. Procédé selon la revendication 10, dans lequel les premières informations de configuration indiquent l'un ou plusieurs des contenus suivants :
un identifiant du troisième dispositif de réseau ;
un identifiant d'une première cellule, dans lequel la première cellule est une cellule gérée par le troisième dispositif de réseau ; et
un identifiant d'une seconde zone, dans lequel la seconde zone comprend au moins une cellule, et l'au moins une cellule comprend la première cellule gérée par le troisième dispositif de réseau.

12. Dispositif terminal (600), comprenant un processeur (610) et une mémoire (630), dans lequel la mémoire est couplée au processeur, et le processeur est configuré pour réaliser le procédé selon l'une quelconque des revendications 1 à 6.

13. Premier dispositif terminal (600), comprenant un processeur (610) et une mémoire (630), dans lequel la mémoire est couplée au processeur, et le processeur est configuré pour réaliser le procédé selon l'une quelconque des revendications 7 à 11.
